# EUROPEAN PATENT SPECIFICATION

(11) **EP 4 301 928 B1**
(45) Date of publication and mention of the grant of the patent: **04.12.2024**
(21) Application number: 22711786.8
(22) Date of filing: 03.03.2022
(51) Int. Cl.: E01C 7/18, E01C 7/32, C04B 14/00, C08L 95/00, C08J 3/03

(54) **LAYERED MATERIAL**
SCHICHTMATERIAL
MATÉRIAU EN COUCHES

(30) Priority: 03.03.2021 US 202163200363 P
(43) Date of publication of application: 10.01.2024
(73) Proprietor: Heritage Research Group, LLC, Indianapolis, IN 46278 (US)
(72) Inventor: EICHER, Andrew Jacob, Carmel, IN 46032 (US); EXLINE, Marvin Keller, Terre Haute, IN 47807 (US); THOMAS, Todd, Indianapolis, IN 46268 (US)
(74) Representative: Hamer, Christopher K.
(86) International application number: PCT/US2022/018649
(87) International publication number: WO 2022/187446

(56) References cited:
- NL-C2- 1 016 026
- US-A- 3 477 352
- US-A1- 2020 002 538
- US-B2- 10 364 535

## Description

### CROSS REFERENCE TO RELATED APPLICATION

This application claims the right of priority to U.S. Provisional Patent Application number 63/200,363 filed on March 3, 2021.

### BACKGROUND

The application of markings, such as solid lines or broken lines, to road structures has been accomplished in several ways including painting of the road structure surface and/or securing thermoplastic markings on the road structure surface. However, when thermoplastic markings are used, the adhesive or other means for securing the thermoplastic markings can fail in a variety of manners. Therefore, there remains a need for improved road structures, adhesives, methods, and apparatus for securing thermoplastic markings on road structures.

### SUMMARY

In accordance with the present invention, there is provided a layered material having the features of claim 1. Further preferred embodiments are defined by the features of dependent claims 2-22.

According to various features, characteristics and embodiments which will become apparent as the description thereof proceeds, the present disclosure provides for compositions, methods, and products that improve the adhesion of markings, for example, thermoplastic road markings, to substrates. In some embodiments, such thermoplastic road markings include, but are not limited to, striping, solid lines, broken lines, and other traffic safety or informative markings placed on a substrate. Such markings may, for example, be hot applied.

In one embodiment, a layered material is disclosed with a thermoplastic layer positioned on top of a void-filling asphalt layer.

In another embodiment, a layered material comprising a substrate, wherein the substrate has a surface with voids, a void-filling asphalt layer on the surface of the substrate that penetrates at least some of the surface voids, wherein said void-filling asphalt layer comprises an asphalt and a surfactant; and a thermoplastic layer positioned on top of the void-filling asphalt layer is disclosed.

In some embodiments, the substrate may comprise a roadway, such as a pre-existing or new pavement.

In still other embodiments, the substrate may comprise an asphalt pavement. When an asphalt pavement is used, the asphalt pavement may comprise a hot asphalt mix.

In yet other embodiments, the substrate may comprise a concrete pavement.

In further embodiments, the surfactant used in a layered material may comprise at least one of a polymeric surfactant, a non-ionic surfactant, an alkoxylated alcohol or an ethyoxylated alcohol.

In some embodiments, the void-filling asphalt layer may comprise at least one of a primary emulsifier, a carboxylate, an amine, a tall oil based carboxylate or a tall oil based alkyl amine.

In certain embodiments, the layered material may comprise a longitudinal joint. When present, a longitudinal joint may be formed by abutting two asphalt mats against each other. For example, a longitudinal joint can be formed at the center of a roadway when constructing a two-lane road surface using two abutting asphalt mats. When present, a longitudinal joint may comprise a void, structure. In certain embodiments, void structures can result from insufficient compaction of the aggregate present in the pavement at the longitudinal joint. Also, when a longitudinal joint is present, a void-filling asphalt material layer may be positioned over at least a portion of a longitudinal joint. Furthermore, when a longitudinal joint is present, a longitudinal joint sealant layer may be positioned under an asphalt pavement layer and/or below the longitudinal joint.

Additional embodiments of the invention, as well as features and advantages thereof, will be apparent from the descriptions herein.

### BRIEF DESCRIPTION OF THE DRAWINGS

Figure 1 shows a test setup, where the adhesion of a thermoplastic strip or marking can be measured.
Figure 2 shows a digital image of one test setup, where the adhesion of a thermoplastic strip or marking can be measured.

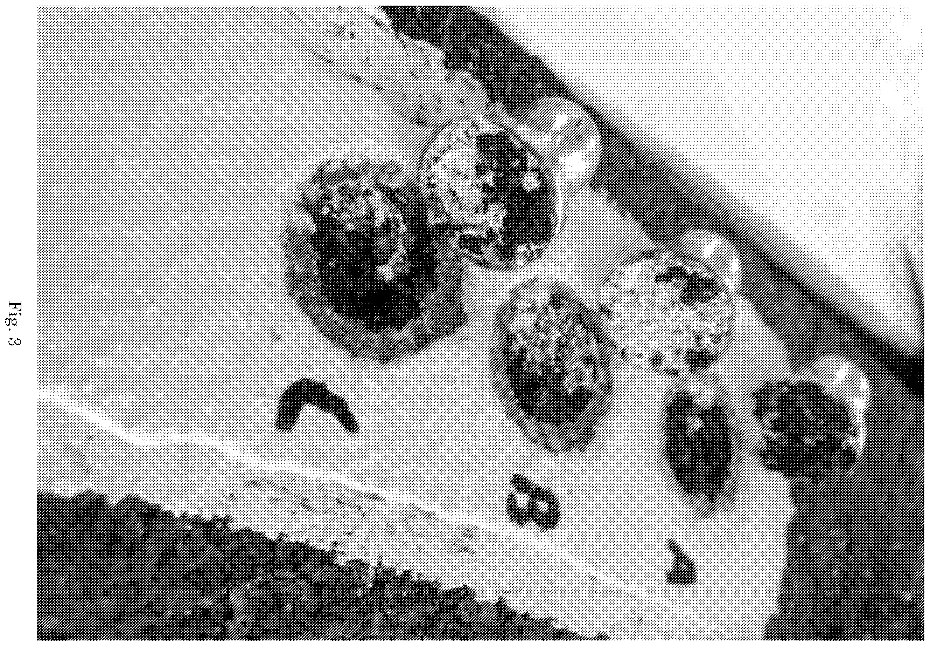

Figure 3 shows a digital image of the results of one series of tests.

In this specification, the following non-SI units are used, which may be converted to the respective SI or metric unit according to the following conversion table:
1 mil = 0,00254 cm;
1 inch = 2,54 cm;
(value in °F -32) * 5/9 = new value in °C;
1 gal/yd² = 4,53 L/m².

### DETAILED DESCRIPTION

For the purposes of promoting an understanding of the principles of the invention, reference will now be made to certain embodiments and specific language will be used to describe the same. It will nevertheless be understood that no limitation of the scope of the invention is thereby intended, such alterations and further modifications, and such further applications of the principles of the invention as described herein being contemplated as would normally occur to one skilled in the art to which the invention relates. Additionally, in the detailed description below, numerous alternatives are given for various features. It will be understood that each such disclosed alternative, or combinations of such alternatives, can be combined with the more generalized features discussed in the Summary above, or set forth in the embodiments described below to provide additional disclosed embodiments herein.

Application of sealants or other treatments during construction or repair of layered surfaces such as roads or parking lots can result in reduction of the adhesion of thermoplastic striping or makings to the surface. The application of non-penetrating treatments can lead to reduction in permeability of the surface and may also result in significant texture loss to the surface. Reduction in adhesion of the thermoplastic striping or makings on the surface may result in the movement or the loss of the striping or markings on the surface, which can pose public safety concerns. For example, traffic and/or snowplows can increase the rate at which thermoplastic striping or markings on a surface separate or move.

It is therefore one objective of the present disclosure to provide substrates, void-filing asphalt compositions, layers, and/or methods for improving the adhesion of markings such as thermoplastic striping or thermoplastic markings on the surface of a layered material such as a road, for example. Fog seal treatments or liquid asphalt sealants may be used to seal high-permeability joint areas after pavement construction where thermoplastic striping and/or other markings are applied.

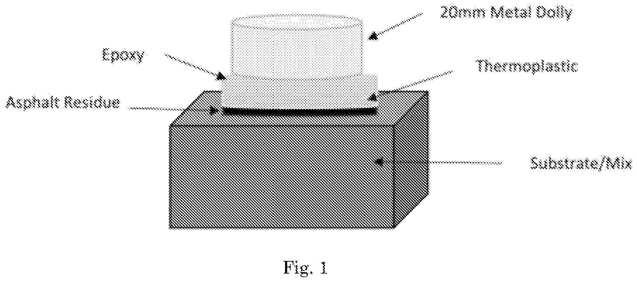

Fig. 1 shows a test setup, where the adhesion of a thermoplastic strip or marking can be measured. Here, a thermoplastic strip or marking has been applied to a substrate or mix with an asphalt residue present. An epoxy resin or adhesive is used to bond a 20 mm metal dolly to the adhesive strip. The metal dolly is then attached to an instrument, such as a DeFelsko Positest AT-A Pull-off Adhesion Tester, which can measure the tensile strength of the adhesion of the thermoplastic striping or marking to the underlying layers.

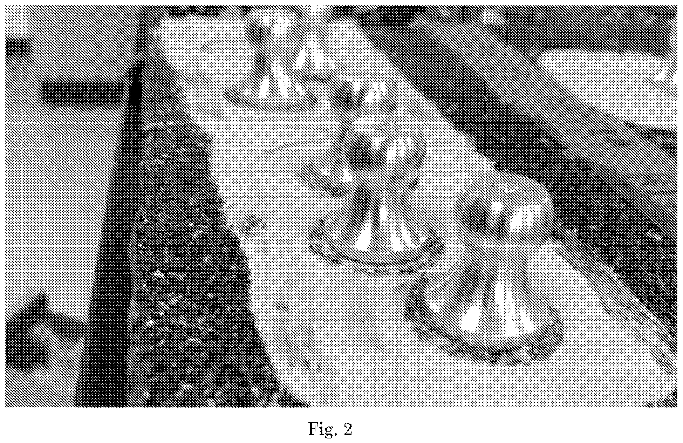

Fig. 2 shows a digital image of one test setup, where the adhesion of a thermoplastic strip or marking can be measured. Here again, a thermoplastic strip or marking has been applied to a substrate or mix with an asphalt residue present. An epoxy resin or adhesive is used to bond a 20 mm metal dolly to the adhesive strip. The metal dolly is then attached to an instrument, such as a DeFelsko Positest AT-A Pull-Off Adhesion Tester, which can measure the tensile strength of the adhesion of the thermoplastic striping or marking to the underlying layers.

Fig. a shows a digital image of the results of one series of tests. In this series of tests, test 'A' shows a failure in the underlying substrate (pavement mix layer) as seen by the large remainder of black asphalt layer observed adhered to the metal dolly, indicating a high degree of adhesion between the thermoplastic layer and asphalt. Tests 'B' and 'C' show a failure largely in the thermoplastic layer as seen by the portion of the cross-sectional area which remained yellow in color, indicating failure in the adhesion of the thermoplastic layer to the underlying pavement substrate.

Generally speaking, surface treatments used for maintenance of asphalt pavements generally include coatings, penetrating or rejuvenating sealants, and aggregate-based seals. Surface treatment coating compositions only provide a moisture and UV light barrier on the top surface of asphalt pavements. Penetrating or rejuvenating sealants are asphalt-based compositions that are blended with water or cutbacks that allow them to soften the surface of the pavement to penetrate the surface layer only slightly, which increases the pavement's flexibility to mitigate the impact of environmental aging.

Pavement maintenance products available to date do not address or correct structural features of the original pavement that were created at the time the pavement was constructed; nor do they address structural features below the surface of the pavement when the pavement maintenance products are applied and used. The preferred time of application to receive maximum benefit from the reduced air voids is shortly after construction. This allows for less oxidation of the asphalt to occur and reduced deterioration from water, resulting in a greater life of the pavement. Accordingly, there remains a need to develop asphalt-based compositions for the treatment and maintenance of asphalt pavement including those that do not reduce the adhesion of road striping or road markings to the surface of such a substrate.

Thermoplastic markings such as road striping or road markings have become more widespread in their use on public roadways. While generally more expensive that alternatives, such as painting road striping or road markings, thermoplastic markings may have a longer life cycle, have improved visibility, and other additives such as glass beads or reflectors can modify their properties to improve traction, or anti-skid properties or improve visibility.

The process for applying thermoplastic markings may involve heating a special type of road paint called "hot melt marking paint" or "thermoplastic striping". This specialized material is heated to a temperature of about 392 degrees Fahrenheit, melting it quickly into liquid that can then cool quickly once set. The result is a thick, bright, reflective, and/or weather-resistant coating. Because the thermoplastic markings may protrude above the surface of a road, the markings may be more exposed to forces that wear, move, or remove the marking. For example, snow plows used during colder seasons to remove snow or other precipitation may damage thermoplastic markings on the surface of roads.

Various types of thermoplastics may be used in embodiments of the present disclosure. For example, alkyd thermoplastic or thermoplastic material which comprises a hydrocarbon thermoplastic may be used in various embodiments. When applied, the thermoplastic marking may comprise a roadway marking such as a road stripe, a traffic symbol, interstate emblem, highway divider line, or other indicia.

When used, the thickness of thermoplastic markings, either before or after application, may be of any suitable thickness, for example, about 10 mil, about 20 mil, about 30 mil, about 40 mil, about 50 mil, about 60 mil, about 70 mil, about 80 mil, about 90 mil, about 100 mil, about 110 mil, about 120 mil, about 130 mil, about 140 mil, about 150 mil, and/or greater than about 150 mil.

Many factors may affect the adhesion of such thermoplastic road markings to underlying structures. For example, without being bound by theory, the texture of the underlying structure may affect adhesion as well as other mechanical, chemical, or environmental factors present when the thermoplastic marking is applied or during the life of the thermoplastic marking. Traditionally, asphalt emulsions have been applied on the surface of longitudinal joints to reduce pavement permeability. However, these products were not necessarily formulated with an eye towards maximizing adhesion of striping that may ultimately be placed on top of it. Emulsions that eliminate texture on the surface of the longitudinal joint, or are not otherwise chemically formulated to receive thermoplastic striping, can result poor adhesion of the striping to the roadway.

The present disclosure provides for a void filling asphalt emulsion, such as those comprising about 25 to about 50 wt.% of an asphalt content, that are formulated to maximize adhesion of thermoplastic striping to the underlying pavement. In certain embodiments, the method comprises: forming a base asphalt emulsion having about 45 to 74 wt.% of an asphalt, and combining the base asphalt emulsion with a wetting agent to produce a void filling asphalt emulsion comprising about 25 to about 50 wt.% of the asphalt. Examples of suitable compositions for use in embodiments of the present disclosure includes the compositions disclosed in U.S. Patent Application Number. 16/454,290 (Pub. No. 2020-0002538 A1).

The useful life of an asphalt pavement, and the markings thereon, can be highly dependent upon its ability to be uniformly compacted at the time of construction of the pavement so as to create a dense matrix of asphalt coated aggregate having limited interconnected void volumes that resists the infiltration of water into the pavement structure. During the construction process, handling of the asphalt mixture can cause segregation, which can cause a non-uniform blend of the pavement aggregates, which can lead to coarse areas in the finished pavement with higher interconnected air voids. These coarse areas can comprise a high concentration of interconnected void structures that detrimentally allow water and air to permeate the asphalt pavement. The effect of such water and air intrusion can lead to more rapid oxidation of the asphalt binder and/or removal of the asphalt coating on the aggregate caused by water trapped in the pavement. Poor or inadequate compaction can also cause high air voids with high permeability to air and water. Paving in cool or cold weather can also lead to higher air void mixtures. Areas with more hand work around utilities or structures also lead to higher permeable pavements.

Construction of longitudinal and transverse joints also can produce higher air void pavements in the area around the joint. Higher air and water permeable pavements can lead to the action of water damaging the asphalt aggregate film which can lead to stripping of the asphalt film on aggregate leading to early pavement failure. Traffic loads cause mechanical action which, in addition to the higher temperatures and water vapor, are responsible for stripping of the binder from the aggregate. Markings on these portions of the surface may be particularly susceptible damage, movement, or removal from the surface.

Pavements in North America typically are designed for an optimum air void content of 4% in the laboratory. Most state DOT's only advise 6-7% air void in practice on roads. The result is that the road has more air and water permeability and age more quickly than designed. Once an asphalt pavement is in place, compacted and allowed to cool, the void structure is set and little post compaction occurs outside the wheel path. Agencies have required density specifications that must be met; and if the pavement is below the minimum requirements set by the Agency, pay adjustments will be made to account for loss of pavement life or, in the worst cases, the pavement may be milled and removed and a new mixture put in its place.

Traditional asphalt emulsions that are capable of being diluted with water have been used as surface treatment compositions in an effort to reduce the intrusion of air and water into asphalt pavements. These emulsions, even when diluted to the point of reducing them to have a low asphalt content, typically have minimal penetration into the voids of a pavement. Accordingly, at best they only result in temporarily sealing the surface of a pavement. Application rates of greater than 0.1 gal/yd² are avoided, because they may leave too much asphalt on the surface, thus resulting in loss of surface texture and reduced pavement friction and its associated safety issues. Higher concentrations of surfactant in the emulsions have been tried in an effort to increase their ability to penetrate into the voids in pavements. Increasing the amount of surfactant usually results in increasing the emulsion stability while greatly slowing the emulsion's ability to set or cure, thus making it very susceptible to leaching from uncured asphalt emulsion from the pavement in the case of a rain event. This lack of water resistivity is an environmental concern releasing unbroken asphalt emulsion into ditches and streams.

Traditional asphalt emulsions are typically made using a colloid mill. The asphalt content of such emulsions must be high enough for the shearing action of the colloid mill to create small, uniform droplets of asphalt suspended in a water/soap solution. Typically, the asphalt content would be between 45 wt. % and 74 wt.%. For such traditional formulations, using an asphalt content below 45 wt.% at the time of shearing can create inconsistent particle size. Using an asphalt content higher than 74 wt.% creates a risk of inverting the emulsion from an oil in water to a water in oil emulsion. This results in the water/soap phase being suspended in a continuous phase of asphalt.

The present disclosure provides an asphalt emulsion surface treatment composition that penetrates asphalt pavements and fills interconnected air voids beneath the surface of asphalt pavements then cures quickly providing improved resistance to water and better adhesion of a thermoplastic layer. Because the penetrating capability and water resistivity do not typically coexist in an asphalt emulsion at the same time with standard asphalt emulsions, the void-filling and improved adhesion of a thermoplastic layer capabilities of the asphalt emulsions provided herein having about 25 to about 50 wt.% of an asphalt content are altogether surprising and unexpected.

The present disclosure provides an asphalt emulsion composition referred to as a "rapid penetrating emulsion" (sometimes referred to as an "RPE") or "void filling emulsion" or "reduced permeability emulsion" that has been developed to penetrate into asphalt pavements and fill voids below the surface of such pavements. In certain embodiments, the asphalt emulsion composition of the present disclosure comprises an asphalt emulsion that is made by the combined use a primary emulsifier and a surface tension reducing surfactant. In certain embodiments, the primary emulsifier is used to produce a base asphalt emulsion, and the surface tension reducing surfactant is added to effect penetration into an asphalt pavement. However, when combined together these materials cure quickly producing a pavement that is resistant to water, has reduced permeability, and improved adhesion to a layer of thermoplastic marking.

In certain embodiments, the base asphalt emulsion is made by combining a water and an asphalt phase to create a homogenous solution. In certain embodiments, this is done by shearing asphalt with a soap solution of water and the primary emulsifier, as well as any additional additives needed before emulsification (depending on desired application and physical characteristics). The shearing may be conducted, for example, in a colloidal mill where the components are combined at predetermined ratios to get the final desired composition of the base emulsion.

In certain embodiments, the void reducing emulsion of the can be created using the post-addition of a surface tension reducing solution that includes a wetting agent (*i.e*., surface tension reducing solution (water and surfactant)) to the base asphalt emulsion. The final desired asphalt content of the void filling emulsion can be calculated to determine how much of the surface tension reducing solution needs to be added to the base asphalt emulsion to form the final product. In certain embodiments, this pre-calculated volume of solution and emulsion is mixed and can be pumped into an empty mixing tank, tanker truck, or emulsion distributor. In certain embodiments, the mixture is then agitated into a homogenous solution before being applied onto a desired application area.

In certain embodiments, the primary emulsifier may be selected from emulsifiers that are commonly used to form asphalt emulsions. In certain embodiments, the emulsion compositions of the present disclosure are diluted with water only; however, in alternative embodiments the emulsions can be diluted with a weak soap solution made using the same emulsifier/surfactant as used for the primary emulsifier to provide better emulsion stability. In certain embodiments, when diluting with the wetting solution (additional surfactant and water), care should be taken to avoid over stabilization of the emulsion which can result in the emulsion not wanting to revert to the cured asphalt state in a timely fashion. Such over-stabilization could create a situation where the application of the diluted emulsion may be susceptible to leaching (poor water resistivity) for an extended period of time from, for example, further dilution by a rain event.

Exemplary primary emulsifiers tested in accordance with the present disclosure included tall oil-based carboxylates and alkyl amines. Non-limiting examples of tall oil-based carboxylates include PC-1,542 (available from Ingevity Corporation), crude tall oil (available from Champion Paper Company) and Indulin^{®} SA-L (available from Ingevity Corporation). Non-limiting examples of alkyl amines include, Indulin^{®} SBT-50 (available from Ingevity Corporation), Redicote^{®} E-7000 (available from AkzoNobel), and Redicote^{®} E-47NPF (available from AkzoNobel).

Exemplary surface tension reducing surfactants tested in accordance with the present disclosure include polymeric surfactants (ethoxylates) and mixed stream surfactants (ethoxysulfates, sulfates, sulfonates and carboxylates). Non-limiting examples of polymeric surfactants include Redicote^{®} E-95 (available from AkzoNobel), TRITONTM X-100, TERGITOLTM, TRITONTM RW-50 and ECOSURTTM EH-9 (all available from Dow Chemical), and LUTENSOL^{®} XL 80, LUTENSOL^{®} XP 80, and LUTENSOL^{®} XP 90 (available from BASF). Non-limiting examples of mixed stream surfactants include BIO SOFT^{®} LD-95 (available from Stepan Company), Dawn 2x (available from Proctor & Gamble), Redicote^{®} E-47 NPF (available from AkzoNobel), Palmolive 11119 and Palmolive 1, 1. 1, 18 (available from Colgate-Palmolive Company).

In certain embodiments, the void filling emulsion can be made in a 2-step process that includes a primary emulsion. In certain embodiments, the primary emulsion comprises an aqueous solution containing an emulsifier and about 45 wt.% to about 75 wt.% of an asphalt (*i.e*, a bituminous compound). Subsequently, the primary emulsion may be diluted to any asphalt content using the surface tension reducing surfactant diluted in water to provide the final void filling emulsion.

Surprisingly, and without being bound to any particular scientific theory, in certain embodiments it was discovered that the primary emulsifier functions to stabilize the asphalt droplets during initial shearing to create an emulsion. Subsequent addition of the surface tension reducing surfactant creates an enhanced ability for the void filling emulsion to penetrate asphalt pavements. With regard to such embodiments, it was further discovered that the surface tension reduction not only aids the penetrating capacity, but also enhances the early water resistance of the emulsion.

Thus, in certain embodiments, Applicant has surprisingly and unexpectedly discovered that addition of the surface tension reducing surfactant into the primary emulsifier soap at the time of initial emulsification using, e.g. a colloid mill does not create the same properties as a process that first creates an emulsion with primary emulsifier with subsequent dilution using the surface tension reducing surfactant. Reduction of surface tension caused by adding the wetting agent at the time of emulsification was found to create emulsion instability and, in some cases, to the point an emulsion could not be formed. In addition, direct addition of undiluted surface tension reducing surfactant to an emulsion was also found to be detrimental to the stability of the emulsion. In certain embodiments, to achieve the desired results, it was discovered that the surface tension reducing surfactant needs to be added to the dilution water that is used to dilute the emulsion to its final asphalt content.

Suitable procedures for producing void-filling emulsions described herein may include the following exemplary processes. First, create the base (primary) asphalt emulsion using a primary emulsifier. The starting or base emulsion will have an asphalt content of from about 45 wt.% to about 75 wt.% and a typical asphalt emulsion particle sized sheared by means of a colloid mill. After formation the resulting primary emulsion should be allowed to cool and stabilize. Next, water with a surface tension reducing surfactant (the wetting agent solution) according to the present disclosure is added to the primary emulsion at a temperature near the emulsion temperature to dilute the emulsion, reduce the asphalt content, and form the void filling emulsion of the present disclosure. The final asphalt content of the void filling emulsion may range from about 30 wt.% to about 50 wt.% depending upon the pavement to be treated and the desired penetrating depth. The amount of surface tension reducing surfactant is generally in the range of about 0.1 to 3 wt.% based on the mass of the total diluted emulsion system. In certain embodiments, other emulsion additives that can be added, but may not essential to the void filling properties of the present disclosure include rejuvenators, oil type emulsions, and others that do not adversely affect the present disclosure.

For example, in one embodiment, a void filling asphalt emulsion is prepared by providing a base asphalt emulsion having about 45 to about 75 wt.% of an asphalt; and combining the base asphalt emulsion with a wetting agent solution to produce a void filling asphalt emulsion, wherein the asphalt comprises about 25 to about 50 wt.% of the void filling asphalt emulsion.

The void filling emulsion of the present disclosure can be used in conjunction with all types of asphalt pavements, including, but not limited to, new hot mix asphalt pavements, longitudinal joints, aged hot mix asphalt pavements, cold in place recycled pavements, cold central plant pavements, cold mix asphalt pavements, etc.

The void filling emulsion used in embodiments of the present disclosure may be applied to an asphalt pavement in a single pass at a heavier application rate if deeper penetration is desired. Alternatively, the void filling emulsion can be applied in multiple, lower rate applications to limit the depth of penetration and fill more voids in the upper pavement layer. The void filling emulsion can be applied to the surface using any suitable method known to those of skill in the art, including by hand or using a mechanical apparatus, such as a vehicle having spray bar applicators (*e.g*., transverse bars, longitudinal bars, or combinations thereof). In certain embodiments, the emulsion may be "brushed" along the surface to help ensure a uniform application across the surface, as well aid in penetration. In certain embodiments, the brushing may occur through the use of a broom, or broom-like device. For example, in certain embodiments a spray applicator vehicle may drag an industrial-type broom behind a transverse spray bar applicator, ensuring an even distribution of material. In other embodiments, the spray bar device may be modified to include a broom-like structure, such that brushing of the material occurs contemporaneously with the ejection of the emulsion from the spray nozzles.

The void filling emulsions of the present disclosure were found to be capable of penetrating and filling voids in asphalt pavement and be resistant to water in less than an hour (>60% residue is retained).

The depth at which voids in an asphalt pavement can be filled may be altered by adjusting the asphalt content of the diluted starting emulsion and the amount of surface tension reducing surfactant in the finished emulsion. In certain embodiments, a higher asphalt content together with a lower amount of surface tension reducing surfactant will produce an emulsion with a reduced ability to migrate into deeper voids in an asphalt pavement. For some applications, this will be a desirable property. Examples include pavements in which the voids are in excess of 10% of the pavement's volume, such as cold-in-place recycled asphalt pavements. In such cases, the recycled pavement may be in excess of three inches thick. In such embodiments, the amount of void filling emulsion required to fill the voids in such pavement structures would be very high - on the order of approximately 1.7 gal/yd².

By controlling the asphalt content of the diluted starting asphalt emulsion and the amount of surface tension reducing surfactant in the finished asphalt, it is possible in certain embodiments to limit the penetration of the void filling emulsion to no more than the top inch of pavement, which would only require an application of 0.6 gal/yd².

For purposes of the present disclosure, the void filling capability can be judged by a combination of two testing protocol: surface texture as measured by the sand patch test ASTM E965; and the National Center for Asphalt Technology (NCAT) falling head field permeability test.

The desired result is to create a significantly reduced falling head field permeability test result while at the same time create minimal effects on the surface texture. This combination is an indication that the void filling emulsion has penetrated the asphalt pavement and not just remained at the surface of the pavement.

As noted above, in certain embodiments the "substrate" of the pavement layer comprises a longitudinal joint. The longitudinal joint may be formed by abutting two asphalt mats against each other. In certain embodiments, the void-filling asphalt material layer is positioned over at least a portion of the longitudinal joint. In certain embodiments, the layered material further comprises a longitudinal joint sealant layer positioned under the asphalt pavement layer and below the longitudinal joint. Such a material may help to seal the pavement joint from the bottom up through the joint. In certain embodiments, the longitudinal joint sealant comprises an asphalt binder, an elastomeric polymer, and at least one thickener. In certain embodiments, the longitudinal joint sealant further comprises at least one wax component. In certain embodiments, the at least one thickener comprises a silica-based material. Exemplary longitudinal joint sealants and methods are described in U.S. Patent No. 10,364,535.

In some embodiments, the substrate may comprise a rumble strip that is milled into the surface of the substrate, such as the longitudinal joint. The rumble strip provides yet another opportunity for moisture to collect and penetrate into the void structure. Accordingly, in certain embodiments that void-filling asphalt emulsion will be applied to the portion of the pavement surface having a rumble strip.

In certain embodiments, the improved adhesion of a road marking to a substrate may be observed by measuring the force required to pull off the road marking from the substrate. In some embodiments, the force applied is applied to the striping/marking at 90 degrees from the surface of the substrate. Any instrument capable of accurately determining pull-off force may be used to test in accordance with the procedures of the present disclosure. In some embodiments, an instrument called a "Positest" model "AT-A" manufactured by DeFelsko Corporation may be used to determine the force required to pull off the road marking from a substrate, for example a treated substrate. When a Positest AT-A is used, a 20 mm aluminum dolly is secured with epoxy to the layer being tested. The epoxy used to secure the dolly to the layer being tested should be adequately strong so that failure of the interface between the dolly and the layer being tested does not fail. Suitable epoxies for use include, but are not limited to, J-B Weld^{™} Original epoxy or J-B Weld KwikWeld^{™} epoxy. The instrument may then be affixed to the dolly and the testing initiated. In some embodiments, when a Positest model AT-A pull-off tester is used, the rate of application of force may be 1.0 MPa/s, and no limit or hold forces may be used. However, those of ordinary skill in the art may adjust the rate of application of force, limit, or hold accordingly. Typically, a series of measurements are taken of a sample material, and their results may be averaged to obtain an average measurement for the sample. In certain embodiments, a series of five, or eight to twelve (such as ten) measurements are taken of a sample material, and their results may be averaged to obtain an average measurement for the sample.

Several failure modes have been observed when testing the adhesion of a road marking to a substrate. For example, "cohesive fracture" or "cohesive failure" may occur which is observed when fracture occurs within a coating layer may occur. Cohesive fracture may sometimes be referred to as "delamination." Another mode of failure includes "adhesive fracture" or "adhesive failure", which may be observed when fracture occurs at the interface between layers (*e.g.*, failure of adhesion between thermoplastic and void-filling asphalt residue, and/or failure of adhesion between void-filling asphalt residue and substrate). "Substrate failure" or "mix failure", on the other hand, indicates failure of the underlying substrate (*e.g*., the asphalt pavement mix) prior to the observation of cohesive or adhesive fracture. Multiple modes of failure may occur together or simultaneously, sometimes referred to as "combined failure", and in such cases, various methods which are known to those of ordinary skill in the art may be used to determine the proportion of each mode of failure. Without being bound by any particular theory, cohesive fracture generally provides a measurement of the internal cohesive strength of a material, and adhesive fracture generally provides a measurement of the strength of the bonding at the interface between layers. Observation of either mix failure or cohesive fracture - in the absence of adhesive fracture - is generally indicative of optimal adhesion of the striping/marking. Hence, in some embodiments, higher average pull-off scores (*e.g.,* about 1.5 MPA @ 35°F or higher) are generally indicative of mix failure or cohesive fracture in the thermoplastic material.

In order to promote a further understanding of the present invention and its various embodiments, the following specific examples are provided. It will be understood that these examples are illustrative and not limiting of the invention. Furthermore, in the Examples and throughout, percentages are given as weight percentages unless otherwise indicated or determined from context.

### EXAMPLE 1

### Preparation of RPE Compositions

### Materials and Methods:

The void filling asphalt emulsion compositions prepared and tested in this Example were made by combining the same base asphalt emulsion with a surface tension reducing surfactant (STR) as shown below in Table 1. The base asphalt emulsion consisted of 59 wt.% asphalt, and a non-ionic emulsifier (Redicote^{®} E-7000, 1.8 wt. % based on total weight of void filling emulsion). An alcohol ethoxylate wetting agent solution (Redicote^{®} E-95) was used as the STR surfactant. "Final Amounts" are based on total weight of final void filling asphalt emulsion.

**Table 1. Compositions and Application Rates used.**

| | Final Amount of STR | Final amount of Asphalt | Application Rate |
|---|---|---|---|
| Road 1 | 0.8 wt.% | 44 wt.% | 0.22 gal/yd² |
| Road 2 | 0.4 wt.% | 47 wt.% | 0.14 gal/yd² |

Test sections were placed on two test road asphalt pavement surfaces. Both roads were paved the year the test sections were placed, and the hot mix asphalt for each was produced from the same hot mix plant from the same mix design. The pavements were both treated with void filling emulsion at the centerline longitudinal construction joint. The pavements were tested for texture and permeability prior to the treatment with void filling emulsion according to the present disclosure. The locations for the initial tests were marked and after the void filling emulsion treatment, the same locations were retested for surface texture and permeability (*i.e.,* after evaporation of water from emulsion and curing of asphalt residue from emulsion that is left behind). The variables of the tests included the asphalt content of the void filling emulsion and application rate.

### Results:

Table 2 summarizes the results of texture measurements and permeability measurements observed.

**Table 2. Texture and Permeability measurements.**

| Road | Asphalt Content (%), Application Rate (gal/yd²), WA(%) | Texture Depth (mm) | ΔTexture (mm), % Change | NCAT Permeability (×10^{e-5} cm/sec) | Δ Permeability (×10^{e-5} cm/sec), % Change |
|---|---|---|---|---|---|
| 1 pretreat | | 0.439 | | 1056 | |
| 1 post-treat | 44, 0.22, 0.8 | 0.422 | 0.017, 3.9 | 53 | 1003, 95 |
| 2 pre-treat | | 0.439 | | 874 | |
| 2 post-treat | 47, 0.14, 0.4 | 0.386 | 0.053, 12.1 | 127 | 747, 85 |

These data demonstrate that when the void filling emulsion has a higher asphalt content the penetration into a pavement is not as deep as when the void filling emulsion has a lower asphalt content. More importantly, as the surface tension reducing surfactant is increased a higher application of void filling emulsion could be applied while affecting very little change in the surface texture. This is an indication that the void filling emulsion penetrated the surface and reduced voids in the pavement structure, and not just on the surface of the pavement as in the case of other typical emulsions.

The void filling emulsions tested in Example 1 penetrated the centerline area of the pavements in 30 minutes or less. Based on calculations, Road 2 had 93% of the emulsion that was applied penetrate into the compacted asphalt mix. By comparison, Road 1 that had a higher asphalt content and lower amount of surface tension reducing surfactant had 86% of the void filling emulsion penetrate the compacted asphalt mix.

### EXAMPLE 2

### Emulsion Penetration

### Materials and Metbods:

The texture depths from the road sections of Example 1 were measured before and after application. The measurements were made after the water had left the emulsion, thus measuring the emulsion residue thickness remaining on the pavement surface.

### Results:

Knowing the application rate and residue content, the actual percent of emulsion applied that penetrated the asphalt mixture was calculated and is provided in Table a below.

**Table 3. Percent of Emulsion in Pavement.**

| Road | Pre-, PostTreatment (mm) | Residue Thickness (mm) | Emulsion Rate (gal/yd²) | Emulsion Asphalt Content (%) | Surface Emul. (gal/yd²) | Emul. in pavement (gal/yd²), (%) |
|---|---|---|---|---|---|---|
| 1 | 0.439, 0.401 | 0.0038 | 0.22 | 44 | 0.015 | 0.205, 93.2 |
| 2 | 0.439, 0.386 | 0.053 | 0.14 | 47 | 0.020 | 0.120, 86.0 |

These data show that a high percentage of the void filling asphalt emulsion penetrated into the asphalt roads.

### EXAMPLE 3

### Positest AT-A Pull-Off Adhesion Method

### Materials and Methods:

A DeFelsko Corporation Positest model AT-A instrument is used to determine the strength of adhesion between a thermoplastic marking layer and a substrate.

The test substrate is allowed to cure for 48 hours after preparation. After curing, a thermoplastic marking is applied to the substrate according to the application instructions for the thermoplastic marking material being utilized. The thermoplastic marking is allowed to cool to ambient temperature and set for 24 hours.

Once set for 24 hours, a 20 mm dolly is attached to the thermoplastic marking with J-B Weld^{™} Original or J-B Weld, KwikWeld^{™} epoxy according to the instructions for the epoxy being used.

The Positest AT-A instrument is then affixed to the dolly and the dolly pulled until failure, with the testing occurring at 35°F,

Failure measurements are performed for 12 locations and the results collected and the force required for failure may be averaged to obtain an average pull off strength or pull off force.

### EXAMPLE 4

### Positest AT-A Pull-Off Adhesion

### Materials and Methods:

An asphalt substrate was located and an RPE composition was prepared by combining a base asphalt emulsion consisting of 59% by weight asphalt and a non-ionic emulsifier (Redicote^{®} E-7000, 1.8 wt. % based on total weight of void filling emulsion) and an ethoxylate wetting agent solution (Redicote^{®} E-95). The RPE composition included STR surfactant in the final composition comprising 1.0 wt.% STR in the final RPE composition and 38% wt.% asphalt in the final RPE composition.

A substrate for testing was located, and the RPE composition above was applied to a portion of the substrate at a rate of 0.15 gallons per square yard (gal/sy or gal/y²) and a portion of the substrate was left untreated as a control. Additionally, comparative fog seal emulsions (identified as "SS-1H", "AE-NT", and "CIR") were applied to portions of the substrate for testing as set forth in Table 4.

A thermoplastic marking layer was applied as disclosed in Example 3 and the pull-off strength of the thermoplastic marking layer to the underlying substrate was measured of both the treated and untreated portions of the substrate, also according to Example 3.

### Results:

**Table 4.**

| Test No. | Emulsion | Primary Emulsifier, wt% | Asphalt content, wt% | Surface Tension Reducer (STR), wt% | Peak Load Pull Off (average after 12 tests) (MPa) | Nature of Failure |
|---|---|---|---|---|---|---|
| 1 | RPE | Non-ionic/anionic emulsifier, 1.1 | 38 | 1.0 | 1.66 | >65% of failures observed as failures in substrate or thermoplastic cohesion |
| 2 | SS-1H | Non-ionic/anionic emulsifier 1.8 | 59 | 0 | 1.5 | >80% of failures observed as failures in adhesion between asphalt residue and substrate, and/or thermoplastic and asphalt residue |
| 3 | AE-NT | Non-ionie/anionic emulsifier, 1.8 | 55 | 0 | 1.27 | >70% of failures observed as failures in adhesion between asphalt residue and substrate, and/or thermoplastic and asphalt residue |
| 4 | CIR | Cationic Emulsifier 1.7 | 59 | 0 | 1.54 | >75% of failures observed as failures in adhesion between asphalt residue and substrate, and/or thermoplastic and asphalt residue |
| 5 | Unsealed Control | N/A | N/A | 0 | 1.3 | >60% of failures observed as failures in substrate or thermoplastic cohesion |

The RPE-treated portion of the substrate (Test #1) exhibited a 27% increase in pull-off strength as compared to the untreated control portion (Test #5) of the substrate. In addition, unlike the other comparative materials that exhibited a majority of failures as being adhesive in nature, a majority of the material failures observed during the 12 tests of the RPE-treated surfaces were surprisingly found to be cohesive fractures in the thermoplastic or substrate failures. That is, the RPE Test #1 demonstrated that less than 35% of the failures represented adhesive failures, while all other Test #'s 2-4 exhibited adhesive failures occurring at a rate of >70%. And while Control Test #5 (no emulsion used) exhibited a majority of failures in the substrate or cohesive fracture in the thermoplastic, it is important to note that Control Test #5 still exhibited a lower average pull-off strength than RPE Test #1. Additionally, Control Test #5 represents the test case of a road surface lacking a void-filling asphalt sealant, which would subject the roadway (particularly at the longitudinal joint) to substantial air and water intrusion into unsealed air voids.

The uses of the terms "a" and "an" and "the" and similar references in the context of describing the invention (especially in the context of the following claims) are to be construed to cover both the singular and the plural unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A layered material comprising:
a substrate, wherein the substrate has a surface with voids;
a void-filling asphalt layer on the surface of the substrate that penetrates at least some of the surface voids, wherein said asphalt layer comprises an asphalt and a surfactant; and
a thermoplastic layer positioned on top of the void-filling asphalt layer.

2. The layered material of claim 1, wherein the substrate comprises a roadway.

3. The layered material of any of the preceding claims, wherein the substrate comprises an asphalt pavement.

4. The layered material of claim 3, wherein the asphalt pavement comprises a hot mix asphalt.

5. The layered material of any of claims 1-2, wherein the substrate comprises a concrete pavement.

6. The layered material of any of the preceding claims, wherein surfactant comprises a polymeric surfactant.

7. The layered material of any of the preceding claims, wherein the surfactant comprises a non-ionic surfactant.

8. The layered material of any of the preceding claims, wherein the surfactant comprises an alkoxylated alcohol.

9. The layered material of any of the preceding claims, wherein the surfactant comprises an ethoxylated alcohol.

10. The layered material of any of the preceding claims, wherein the void-filling asphalt layer further comprises a primary emulsifier.

11. The layered material of claim 10, wherein the primary emulsifier comprises at least one of a carboxylate or an amine.

12. The layered material of claim 10, wherein the primary emulsifier comprises at least one of a tall oil based carboxylate or an alkyl amine.

13. The layered material of any of the preceding claims, wherein the void-filling asphalt layer comprises a void-filling asphalt emulsion.

14. The layered material of claim 13, wherein the void filling asphalt emulsion comprises about 0.1 to about 3 wt.% of the surfactant based on the total weight of the void filling asphalt emulsion.

15. The layered material of any of the preceding claims, wherein the thermoplastic layer comprises a roadway marking.

16. The layered material of any of the preceding claims, wherein the thermoplastic material comprises an alkyd thermoplastic.

17. The layered material of any of the preceding claims, wherein the surface of the substrate with the void-filling asphalt material layer exhibits a surface texture that represents a difference of less than 20% when compared to the surface texture of the substrate in the absence of the void-filling asphalt layer when measured according to ASTM E965.

18. The layered material of any of the preceding claims, wherein the thermoplastic layer exhibits an average peak-load pull-off of at least 1.50 MPa at a surface temperature of 1.67°C (35°F) when measured according to the Positest AT-A Pull-Off Adhesion Method.

19. The layered material of any of claims 13-18, wherein the void filling asphalt emulsion is applied to the surface at an application rate of about 0.453 l/m² (0.1 gal/yd²) to about 9.06 l/m² (2.0 gal/yd²).

20. The layered material of any of claims 13-19, wherein the emulsion exhibits a penetration value of at least 80 wt.% within 5 minutes when passing the emulsion through a #500 mesh sieve at 50°C.

21. The layered material of any of the preceding claims, wherein the substrate comprises a rumble strip milled into the surface.

22. The layered material of claim 21, wherein the void-filling asphalt layer is positioned on the rumble strip.

## Patentansprüche

1. Schichtmaterial, umfassend:
ein Substrat, wobei das Substrat eine Oberfläche mit Poren aufweist;
eine porenfüllende Asphaltschicht auf der Oberfläche des Substrats, die in mindestens einige der Oberflächenporen eindringt, wobei die besagte Asphaltschicht einen Asphalt und ein Tensid umfasst; und
eine thermoplastische Schicht, die auf der porenfüllenden Asphaltschicht positioniert ist.

2. Schichtmaterial nach Anspruch 1, wobei das Substrat eine Fahrbahn umfasst.

3. Schichtmaterial nach einem der vorhergehenden Ansprüche, wobei das Substrat eine Asphaltdecke umfasst.

4. Schichtmaterial nach Anspruch 3, wobei die Asphaltdecke einen Heißasphalt umfasst.

5. Schichtmaterial nach einem der Ansprüche 1-2, wobei das Substrat eine Betondecke umfasst.

6. Schichtmaterial nach einem der vorhergehenden Ansprüche, wobei das Tensid ein polymeres Tensid umfasst.

7. Schichtmaterial nach einem der vorhergehenden Ansprüche, wobei das Tensid ein nichtionisches Tensid umfasst.

8. Schichtmaterial nach einem der vorhergehenden Ansprüche, wobei das Tensid einen alkoxylierten Alkohol umfasst.

9. Schichtmaterial nach einem der vorhergehenden Ansprüche, wobei das Tensid einen ethoxylierten Alkohol umfasst.

10. Schichtmaterial nach einem der vorhergehenden Ansprüche, wobei die porenfüllende Asphaltschicht weiterhin einen primären Emulgator umfasst.

11. Schichtmaterial nach Anspruch 10, wobei der primäre Emulgator mindestens eines von einem Carboxylat oder einem Amin umfasst.

12. Schichtmaterial nach Anspruch 10, wobei der primäre Emulgator mindestens eines von einem Carboxylat auf Talgölbasis oder einem Alkylamin umfasst.

13. Schichtmaterial nach einem der vorhergehenden Ansprüche, wobei die porenfüllende Asphaltschicht eine porenfüllende Asphaltemulsion umfasst.

14. Schichtmaterial nach Anspruch 13, wobei die porenfüllende Asphaltemulsion etwa 0,1 bis etwa 3 Gew.-% des Tensids umfasst, bezogen auf das Gesamtgewicht der porenfüllenden Asphaltemulsion.

15. Schichtmaterial nach einem der vorhergehenden Ansprüche, wobei die thermoplastische Schicht eine Fahrbahnmarkierung umfasst.

16. Schichtmaterial nach einem der vorhergehenden Ansprüche, wobei das thermoplastische Material einen Alkyd-Thermoplasten umfasst.

17. Schichtmaterial nach einem der vorhergehenden Ansprüche, wobei die Oberfläche des Substrats mit der porenfüllenden Asphaltmaterialschicht eine Oberflächentextur aufweist, die einen Unterschied von weniger als 20 % im Vergleich zu der Oberflächentextur des Substrats bei Fehlen der porenfüllenden Asphaltschicht bei Messung gemäß ASTM E965 darstellt.

18. Schichtmaterial nach einem der vorhergehenden Ansprüche, wobei die thermoplastische Schicht eine durchschnittliche Spitzenlast-Abzugskraft von mindestens 1,50 MPa bei einer Oberflächentemperatur von 1,67 °C (35 °F) bei Messung gemäß der Positest-AT-A-Pull-Off-Adhesion-Methode aufweist.

19. Schichtmaterial nach einem der Ansprüche 13-18, wobei die porenfüllende Asphaltemulsion auf die Oberfläche mit einer Auftragrate von etwa 0,453 l/m² (0,1 gal/yd²) bis etwa 9,06 l/m² (2,0 gal/yd²) aufgetragen wird.

20. Schichtmaterial nach einem der Ansprüche 13-19, wobei die Emulsion einen Eindringwert von mindestens 80 Gew.-% innerhalb von 5 Minuten bei Leiten der Emulsion durch ein 500-Mesh-Sieb bei 50 °C aufweist.

21. Schichtmaterial nach einem der vorhergehenden Ansprüche, wobei das Substrat einen Rüttelstreifen, der in die Oberfläche gefräst ist, umfasst.

22. Schichtmaterial nach Anspruch 21, wobei die porenfüllende Asphaltschicht auf dem Rüttelstreifen positioniert ist.

## Revendications

1. Matériau en couches comprenant :
un substrat, dans lequel le substrat a une surface avec des vides ;
une couche d'asphalte de remplissage de vides sur la surface du substrat qui pénètre dans au moins quelques-uns des vides de surface, dans lequel ladite couche d'asphalte comprend un asphalte et un tensioactif ; et
une couche thermoplastique positionnée par-dessus la couche d'asphalte de remplissage de vides.

2. Matériau en couches selon la revendication 1, dans lequel le substrat comprend une chaussée.

3. Matériau en couches selon l'une quelconque des revendications précédentes, dans lequel le substrat comprend un trottoir d'asphalte.

4. Matériau en couches selon la revendication 3, dans lequel le trottoir d'asphalte comprend un asphalte mixte chaud.

5. Matériau en couches selon l'une quelconque des revendications 1 à 2, dans lequel le substrat comprend un trottoir en béton.

6. Matériau en couches selon l'une quelconque des revendications précédentes, dans lequel le tensioactif comprend un tensioactif polymérique.

7. Matériau en couches selon l'une quelconque des revendications précédentes, dans lequel le tensioactif comprend un tensioactif non ionique.

8. Matériau en couches selon l'une quelconque des revendications précédentes, dans lequel le tensioactif comprend un alcool alcoxylé.

9. Matériau en couches selon l'une quelconque des revendications précédentes, dans lequel le tensioactif comprend un alcool éthoxylé.

10. Matériau en couches selon l'une quelconque des revendications précédentes, dans lequel la couche d'asphalte de remplissage de vides comprend en outre un émulsifiant primaire.

11. Matériau en couches selon la revendication 10, dans lequel l'émulsifiant primaire comprend au moins un élément parmi un carboxylate ou une amine.

12. Matériau en couches selon la revendication 10, dans lequel l'émulsifiant primaire comprend au moins un élément parmi un carboxylate à base d'huile de tall ou une alkylamine.

13. Matériau en couches selon l'une quelconque des revendications précédentes, dans lequel la couche d'asphalte de remplissage de vides comprend une émulsion d'asphalte de remplissage de vides.

14. Matériau en couches selon la revendication 13, dans lequel l'émulsion d'asphalte de remplissage de vides comprend entre 0,1 à environ 3 % en poids du tensioactif sur la base du poids total de l'émulsion d'asphalte de remplissage de vides.

15. Matériau en couches selon l'une quelconque des revendications précédentes, dans lequel la couche thermoplastique comprend un marquage de chaussée.

16. Matériau en couches selon l'une quelconque des revendications précédentes, dans lequel le matériau thermoplastique comprend un thermoplastique alkyde.

17. Matériau en couches selon l'une quelconque des revendications précédentes, dans lequel la surface du substrat avec la couche de matériau d'asphalte de remplissage de vides révèle une texture de surface qui représente une différence de moins de 20 % quand elle est comparée à la texture de surface du substrat en l'absence de la couche d'asphalte de remplissage de vides quand elle est mesurée selon la norme ASTM E965.

18. Matériau en couches selon l'une quelconque des revendications précédentes, dans lequel la couche thermoplastique révèle un arrachement moyen de charge maximale d'au moins 1,50 MPa à une température de surface de 1,67 °C (35 °F) quand il est mesuré selon le procédé de mesure d'adhérence par arrachement PosiTest AT-A.

19. Matériau en couches selon l'une quelconque des revendications 13 à 18, dans lequel l'émulsion d'asphalte de remplissage de vides est appliquée à la surface à un taux d'application d'environ 0,453 l/m² (0,1 gal/yd²) à environ 9,06 l/m² (2,0 gal/yd²).

20. Matériau en couches selon l'une quelconque des revendications 13 à 19, dans lequel l'émulsion révèle une valeur de pénétration d'au moins 80 % en poids en 5 minutes quand l'émulsion est passée à travers un tamis à maille n° 500 à 50 °C.

21. Matériau en couches selon l'une quelconque des revendications précédentes, dans lequel le substrat comprend une bande rugueuse crénelée dans la surface.

22. Matériau en couches selon la revendication 21, dans lequel la couche d'asphalte de remplissage de vides est positionnée sur la bande rugueuse.
